# EUROPEAN PATENT SPECIFICATION

(11) **EP 2 024 124 B1**
(45) Date of publication and mention of the grant of the patent: **23.01.2013**
(21) Application number: 07733004.1
(22) Date of filing: 30.05.2007
(51) Int. Cl.: B23K 1/08, B23K 3/06, H05K 13/04

(54) **SOLDERING APPARATUS AND METHOD OF OPERATING THE APPARATUS**
LÖTVORRICHTUNG UND VERFAHREN ZUM BETREIBEN DER VORRICHTUNG
APPAREIL DE SOUDAGE ET MÉTHODE D'UTILISATION DE L'APPAREIL

(30) Priority: 30.05.2006 GB 0610679
(43) Date of publication of application: 18.02.2009
(73) Proprietor: PILLARHOUSE INTERNATIONAL LIMITED, Chelmsford, Essex CM1 3BY (GB)
(72) Inventor: TOMBS, Michael, Leigh on Sea, Essex SS9 5AP (GB)
(74) Representative: Carpmael, Robert Maurice Charles
(86) International application number: PCT/GB2007/001988
(87) International publication number: WO 2007/138310

(56) References cited:
- EP-A- 1 600 237
- WO-A-2005/115669
- US-A- 3 217 959
- US-A- 4 610 391
- US-A- 4 802 617
- US-A- 5 156 324

## Description

The present invention relates to a soldering apparatus and to a method of operating the apparatus.

It is well known to provide a selective soldering apparatus in which solder is pumped from a bath of molten solder to a nozzle outlet and component leads on a printed circuit board are dipped into the solder to solder them to the board printed circuit tracks. The solder may be pumped to over flow the nozzle outlet, returning to the solder bath. The pump speed may be varied to adjust the height of the solder at the nozzle outlet. It may be increased intermittently to clean or clear the solder surface at the nozzle outlet. It may also be reduced or stopped to lower the solder surface, for example to pull the solder away from the leads when withdrawing the leads from the solder.

Examples of selective soldering apparatus known in the art can be found in WO 2005/115669.

Manufacturers require that soldering is performed in a nitrogen atmosphere, with very low oxygen content. This improves the quality of the solder joint and helps prevent the formation of dross - oxidised solder. Dross formation is a substantial problem as it results in large quantities of waste solder which must be recovered and can result in bad solder joints if it contaminates the solder flow. The formation of dross is exacerbated by pumping of the solder and its flow through the solder nozzle and back to the bath. Splashing of the solder as it enters the bath leads to increased dross formation.

With large solder baths, the formation of dross can be tolerated for some time before it is necessary to clean the bath surface and/or replace the solder in the bath.

However, we provide a small bath which is particularly suitable for selective soldering operations in which the board is stationary and the bath is moved vertically and horizontally to solder the components to the board. With a small size bath it becomes especially important to minimise dross formation otherwise the bath must be cleaned at frequent intervals, resulting in significant down time of the soldering apparatus and the associated production line.

Thus in one aspect of our invention we provide a solder nozzle having a nozzle body with an inner bore through which solder is pumped to overflow a nozzle outlet. A jacket is provided around the nozzle body to form an enclosed space open at its upper end to receive overflowed solder and communicating at its lower end with the molten solder in the bath. A spiral pathway is provided in the enclosed space so that solder runs down the pathway into the solder bath. The lower end of the spiral may extend to or into the surface of the solder in the bath to provide a continuous path into the solder in the bath. Thus the overflowed solder can be returned to the solder bath without splashing at the surface of the solder in the bath.

Nitrogen gas is fed to the region of the nozzle outlet via a shroud. The shroud surrounds the upper end of the jacket and terminates at the level of the nozzle outlet or below so as not to inhibit access of the nozzle to component leads. The nitrogen inhibits dross formation and also reduces the surface tension of the solder to improve the solder flow. The nitrogen may reduce the solder temperature. Thus in another aspect of our invention we pre-heat the nitrogen by passing the nitrogen along a sinuous tube which is in thermal contact with the solder bath, and in particular may be mounted on the outer surface of the bath wall.

We have found that there is a particular problem with feeding nitrogen into the spiral pathway between the nozzle body and the jacket. Insufficient nitrogen in this region can result in a skin forming on the solder as it runs down the spiral and this may eventually lead to blockage of the spiral pathway. Thus another aspect of our invention provides a port at the lower end of the jacket for nitrogen to flow into or out of the spiral pathway, and hence the full length of the pathway can be purged with nitrogen. Solder may exit the port, and so we prefer to provide a cup around the jacket at the port to collect the solder. The cup may have apertures at its lower end to feed the solder back to the solder bath.

When starting the apparatus, with the solder at the required soldering temperature, the nitrogen gas flow purges the space between the nozzle body and the jacket. Solder is then pumped through the nozzle body to overflow the nozzle outlet and run down into the spiral path way. The nozzle outlet is formed by a tip which forms an overhang on the nozzle body. This, together with the nitrogen atmosphere, breaks the skin tension of the solder as it drops down to the spiral pathway to provide a rapid and smooth solder run-off. The solder runs down the spiral pathway and flows off the bottom of the spiral into the solder bath and/or out of the port and into the bath via the cup.

The invention will be further described by way of example with reference to the accompanying drawings in which:
Figure 1 is a cross-section through a soldering apparatus of the invention;
Figure 2 is an external view of a solder bath of the apparatus of Figure 1 , and
Figure 3 is a horizontal cross section though a pump of the embodiment of Figure 1 along line III-III.

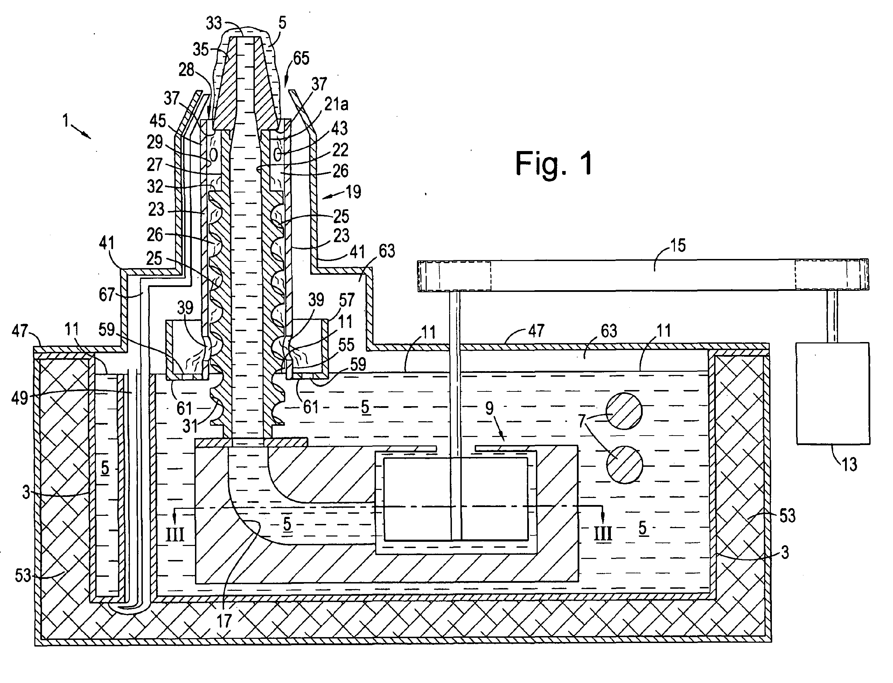

Referring to Figure 1, a selective soldering apparatus 1 includes a bath 3 for containing molten solder 5. The solder 5 is heated by an electric heater 7. An impeller type pump 9 is housed in the solder bath 3 below the upper surface 11 of the solder 5 and is driven by an electric motor 13 via a belt 15. The pump 9 pumps molten solder through a conduit 17 to a nozzle 19.

Nozzle 19 comprises a nozzle body 21 having an inner bore 22 fluidly connected to the conduit 17. The nozzle body 21 is surrounded by a jacket 23 which extends down to the solder surface 11. A spiral pathway 25 is formed on the outer surface 27 of the nozzle body 21 in the space 26 between the nozzle body 21 and the jacket 23. The space is open at its upper end 28. It will be appreciated that the pathway 25 may be formed on the inner surface 29 of the jacket 23 or provided as a separate unit. The lower end 31 of the spiral path 25 extends down to the solder surface 11. The upper end 32 of the spiral path stops below the nozzle outlet 33. Nozzle outlet 33 is formed by a removable iron tip 35 which is screwed into the upper end of the nozzle body portion 21 a. Iron tip 35 forms an overhang 37 on the outer surface 27 of the nozzle body 21 and the upper end 26 of the spiral pathway 25 is located below the overhang 37. Adjacent the lower end of the spiral pathway 25 several ports 39, in this embodiment eight, are formed in the lower end 55 of the jacket 23. Apertures 43 are also provided in the upper end 45 of the jacket 23.

A cup 57 is mounted around the lower end 55 of the jacket 23. Cup 57 has slots 59 in its bottom wall 61. Cup 57 is positioned so that its bottom wall 61 just breaks the surface 11 of the molten solder 5.

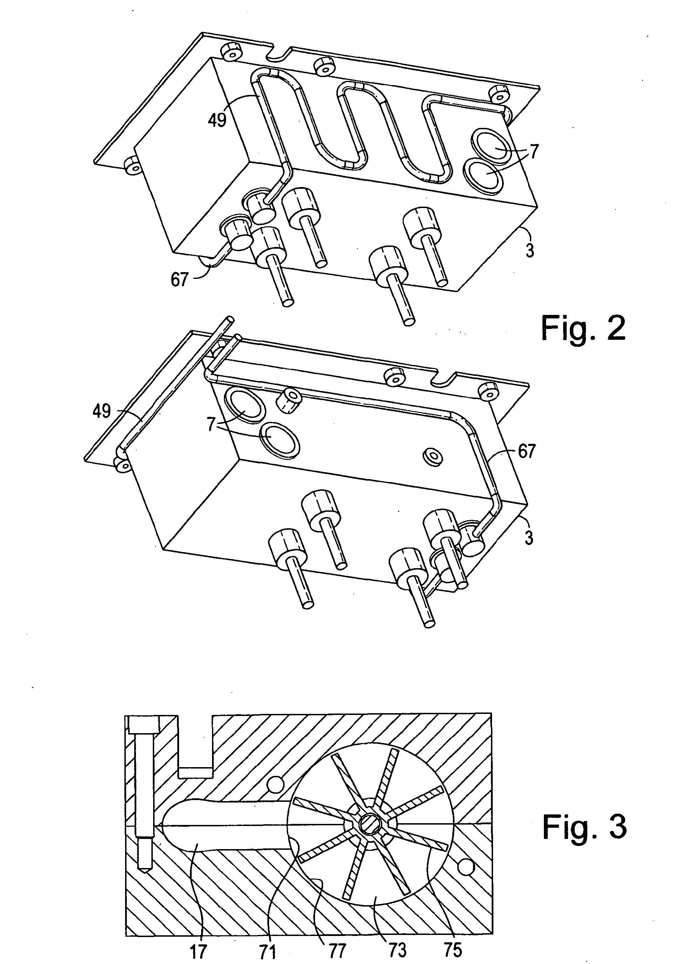

A shroud 41 is positioned around the upper end 45 of the cover 23 and below the nozzle outlet 33. Shroud 41 connects with a bath cover 47 to form an enclosure above the molten solder 5, so the space 63 above the solder 5 can be purged with nitrogen gas. The nitrogen is fed below cover 47 via metal tube 49 which is mounted on the outer surface 51 of the bath 3 (se Figure 2). Bath 3 is surrounded by insulation 53. Thus the nitrogen gas is preheated by its passage through the tube 49.

In use, the solder 5 is heated to its required soldering temperature. Pump 9 is run at low speed so that solder does not overflow the nozzle outlet 33. Nitrogen gas is flowed into the space 63 and out through the upper end 65 of the shroud which is below the level of nozzle outlet 33. The nitrogen gas purges the space 63 of air and in particular oxygen. A dedicated nitrogen tube 67 may be provided in the shroud 41 to direct pre-heated nitrogen gas to a point just above outlet 33, so that pre-heated gas is directed to a joint which is about to be soldered. The region between the nozzle body 21 and the cover 23 housing the spiral pathway 25 is also purged by gas entering or leaving the ports 39. After purging, nitrogen gas flow is continued and the pump speed increased to cause the solder to overflow the nozzle outlet 33. The solder runs down the outside of the nozzle tip 35 and drops off the overhang 37 and onto the spiral pathway 25. The solder runs quickly down to the lower end of the pathway 25 and then enters the solder bath via the bottom of the spiral or flows out though ports 39 into cup 57 and then into the bath 5 via the slots 59. The soldering operation can commence, as well known in the art. Whenever the solder flow is slowed so that there is a break in the flow of solder over the nozzle outlet 33, the pathway 25 can empty of solder and nitrogen gas will then flow into the pathway through the upper end of the cover and/or the ports 39.

Referring to Figure 3, this shows a horizontal cross-section through the pump 9, with the outlet 71 to conduit 17 formed on a diameter of the pump chamber 73 housing the radial blade impeller 75. Thus, the conduit 17 extends away from the chamber wall 77 along a direction radial of the pump chamber 73. We believe that this might give particularly good control over the flow of solder and help reduce formation of solder dust.

## Claims

1. A selective soldering apparatus (1) comprising a bath (3) for molten solder (5), a solder nozzle (19) and a pump (9) for pumping molten solder (5) through the nozzle (19), the nozzle comprising a nozzle body with an inner bore (22) through which solder is pumped to overflow a nozzle outlet (33), a jacket (23) provided around the nozzle body to form an enclosed space (26) open at its upper end (28) to solder which has overflowed from the nozzle outlet (33) and the jacket's lower end (55) being adjacent a surface (11) of molten solder (5) in the bath (3), **characterized in that** a spiral pathway (25) is provided in the enclosed space (26) so that the overflowed solder runs down the pathway (25) into the solder bath (3).

2. Apparatus as claimed in claim 1, wherein a lower end (31) of the spiral pathway (25) extends to or into the surface of the solder in the bath to provide a continuous pathway into the solder in the bath.

3. Apparatus as claimed in claim 1 or 2, wherein a shroud (41) is provided around the upper end of the nozzle and the jacket, adjacent the nozzle outlet, and first inert gas feed means (49) is provided for feeding nitrogen or other inert gas to a region of the nozzle outlet via the shroud (41).

4. Apparatus as claimed in claim 1, 2 or 3, wherein an inert gas feed means (67) is provided for directing preheated nitrogen or other inert gas to a point above the nozzle outlet.

5. Apparatus as claimed in claim 3 or 4, wherein the or each inert gas feed means comprises a thermally conductive tube (49, 67) which is in thermal contact with the solder bath.

6. Apparatus as claimed in claim 5, wherein the or a thermally conductive tube is mounted on an outer surface of a wall of the solder bath.

7. Apparatus as claimed in any one of claims 1 to 6, wherein an overhang (37) is formed on an outer surface (27) of the nozzle body, above the spiral pathway (25), by a tip (35).

8. Apparatus as claimed in any one of claims 1 to 7, wherein a port (39) is provided at the lower end of the jacket for inert gas to flow into or out of the spiral pathway.

9. Apparatus as claimed in claim 8, wherein a cup (57) is provided around the jacket at the port to collect the solder exiting the jacket via the port.

10. Apparatus as claimed in claim 9, wherein the cup has apertures (59) at the cup's lower end (61) to feed the solder back to the solder bath.

11. A method of operating the apparatus of any one of claims 8 to 10, wherein when starting the apparatus, with the solder at a required soldering temperature, an inert gas flow purges the space (26) between the nozzle body and the jacket, and solder is then pumped through the nozzle body to overflow the nozzle outlet and run down into the spiral pathway.

## Patentansprüche

1. Selektive Lötvorrichtung (1), die aufweist: ein Bad (3) für das geschmolzene Lötmittel (5); eine Lötdüse (19); und eine Pumpe (9) für das Pumpen des geschmolzenen Lötmittels (5) durch die Düse (19), wobei die Düse einen Düsenkörper mit einer Innenbohrunlg (22) aufweist, durch die das Lötmittel gepumpt wird, um über einen Düsenaustritt (33) zu strömen, wobei eine Umhüllung (23) um den Düsenkörper vorhanden ist, um einen geschlossenen Raum (26) zu bilden, der an seinem oberen Ende (28) für das Lötmittel offen ist, das über den Düsenaustritt (33) geströmt ist, und wobei das untere Ende (55) der Umhüllung einer Oberfläche (11) des geschmolzenen Lötmittels (5) im Bad (3) benachbart ist, **dadurch gekennzeichnet, dass** ein spiralförmiger Weg (25) im geschlossenen Raum (26) vorhanden ist, so dass das übergeströmte Lötmittel den Weg (25) nach unten in das Lötbad (3) strömt.

2. Vorrichtung nach Anspruch 1, bei der sich ein unteres Ende (31) des spiralförmigen Weges (25) zur oder in die Oberfläche des Lötmittels im Bad erstreckt, um einen kontinuierlichen Weg in das Lötmittel im Bad bereitzustellen.

3. Vorrichtung nach Anspruch 1 oder 2, bei der eine Verkleidung (41) um das obere Ende der Düse und der Umhüllung, benachbart dem Düsenaustritt, vorhanden ist, und wobei eine erste Zuführeinrichtung (49) für inertes Gas für das Zuführen von Stickstoff oder einem anderen inerten Gas zu einem Bereich des Düsenaustritts über die Verkleidung (41) vorhanden ist.

4. Vorrichtung nach Anspruch 1, 2 oder 3, bei der eine Zuführeinrichtung (67) für inertes Gas für das Lenken von vorgewärmtem Stickstoff oder einem anderen inerten Gas bis zu einer Stelle oberhalb des Düsenaustritts vorhanden ist.

5. Vorrichtung nach Anspruch 3 oder 4, bei der die oder eine jede Zuführeinrichtung für inertes Gas ein wärmeleitendes Rohr (49, 67) aufweist, das mit dem Lötbad in Wärmekontakt ist.

6. Vorrichtung nach Anspruch 5, bei der das oder ein wärmeleitendes Rohr an einer Außenfläche einer Wand des Lötbades montiert ist.

7. Vorrichtung nach einem der Ansprüche 1 bis 6, bei der ein Überhang (37) auf einer Außenfläche (27) des Düsenkörpers über dem spiralförmigen Weg (25) mittels eines Kopfendes (35) gebildet wird.

8. Vorrichtung nach einem der Ansprüche 1 bis 7, bei der eine öffnung (39) im unteren Ende der Umhüllung vorhanden ist, damit das inerte Gas in den oder aus dem spiralförmigen Weg strömt.

9. Vorrichtung nach Anspruch 8, bei der ein Becher (57) um die Umhüllung an der Öffnung vorhanden ist, um das Lötmittel aufzunehmen, das aus der Umhüllung über die Öffnung austritt.

10. Vorrichtung nach Anspruch 9, bei der der Becher Öffnungen (59) am unteren Ende (61) des Bechers aufweist, um das Lötmittel zum Lötbad zurückzuführen.

11. Verfahren zum Betätigen der Vorrichtung nach einem der Ansprüche 8 bis 10, bei dem, wenn die Vorrichtung in Betrieb genommen wird, wobei das Lötmittel auf einer erforderlichen Löttemperatur ist, ein Strom des inerten Gases den Raum (26) zwischen dem Düsenkörper und der Umhüllung durchspült und das Lötmittel danach durch den Düsenkörper gepumpt wird, damit es über den Düsenaustritt strömen und nach unten in den spiralförmigen Weg fließen kann.

## Revendications

1. Appareil de soudage sélectif (1), comprenant un bain (3) de soudure fondue (5), une buse de soudage (19) et une pompe (9), pour pomper la soudure fondue (5) à travers la buse (19), la buse comprenant un corps de buse avec un alésage interne (22), à travers lequel la soudure est pompée de sorte à déborder au-delà d'une sortie de la buse (33), une gaine (23) agencée autour du corps de la buse pour former un espace renfermé (26) ouvert au niveau de son extrémité supérieure (28) vers la soudure ayant débordé au-delà de la sortie de la buse (33), l'extrémité inférieure de la gaine (55) étant adjacente à une surface (11) de la soudure fondue (5) dans le bain (3), **caractérisé en ce qu'**une trajectoire en spirale (25) est établie dans l'espace renfermé (26), de sorte que la soudure à débordement s'écoule le long de la trajectoire (25) dans le bain de soudure (3).

2. Appareil selon la revendication 1, dans lequel une extrémité inférieure (31) de la trajectoire en spirale (25) s'étend vers ou dans la surface de la soudure dans le bain pour établir une trajectoire continue vers la soudure dans le bain.

3. Appareil selon les revendication 1 ou 2, dans lequel une enveloppe (41) est agencée autour de l'extrémité supérieure de la buse et de la gaine, près de la sortie de la buse, un premier moyen d'alimentation d'un gaz inerte (49) servant à amener de l'azote ou un autre gaz inerte vers une région de la sortie de la buse à travers l'enveloppe (41).

4. Appareil selon les revendications 1, 2 ou 3, dans lequel le moyen d'alimentation du gaz inerte (67) sert à diriger de l'azote préchauffé ou un autre gaz inerte vers un point situé au-dessus de la sortie de la buse.

5. Appareil selon les revendications 3 ou 4, dans lequel le ou chaque moyen d'alimentation du gaz inerte comprend un tube à conduction thermique (49, 67), en contact thermique avec le bain de soudure.

6. Appareil selon la revendication 5, dans lequel le ou un tube à conduction thermique est monté sur une surface externe d'une paroi du bain de soudure.

7. Appareil selon l'une quelconque des revendications 1 à 6, dans lequel une partie en surplomb (37) est formée sur une surface externe (27) du corps de la buse, au-dessus de la trajectoire en spirale (25), par une pointe (35).

8. Appareil selon l'une quelconque des revendications 1 à 7, dans lequel un orifice (39) est agencé au niveau de l'extrémité inférieure de la gaine pour permettre l'écoulement du gaz inerte dans la trajectoire en spirale et hors de celle-ci.

9. Appareil selon la revendication 8, dans lequel une coupelle (57) est agencée autour de la gaine au niveau de l'orifice pour collecter la soudure sortant de la gaine à travers l'orifice.

10. Appareil selon la revendication 9, dans lequel la coupelle comporte des ouvertures (59) au niveau de l'extrémité inférieure (61) de la coupelle pour ramener la soudure vers le bain de soudure.

11. Procédé d'actionnement de l'appareil selon l'une quelconque des revendications 8 à 10, dans lequel, lors du démarrage de l'appareil, la soudure ayant atteint une température de soudage requise, un écoulement de gaz inerte assure la purge de l'espace (26) entre le corps de la buse et la gaine, la soudure étant ensuite pompée à travers le corps de la buse pour déborder au-delà de la sortie de la buse avant de s'écouler vers le bas dans la trajectoire en spirale.
